# EUROPEAN PATENT APPLICATION

(11) **EP 4 601 276 A1**
(43) Date of publication of application: **13.08.2025**
(21) Application number: 24184077.6
(22) Date of filing: 24.06.2024
(51) Int. Cl.: H04M 1/02, H04M 1/18, G06F 1/16

(54) **EXPANSION FRAME FOR ELECTRONIC DEVICES**

(30) Priority: 30.11.2023 CN 202323273683 U
(71) Applicant: Tilta Technology Co. Ltd, Shenzhen (CN)
(72) Inventor: SEN, WU, Nanshan District, Shenzhen (CN); FENG, ZHICHAO, Nanshan District, Shenzhen (CN); ZENG, WENPING, Nanshan District, Shenzhen (CN); ZHOU, KEFENG, Nanshan District, Shenzhen (CN)
(74) Representative: Purdylucey Intellectual Property

(57) **Abstract**

This disclosure pertains to the field of video rig cages, specifically addressing an expansion frame for electronic devices. The expansion frame is equipped with a storage space and at least one installation interface for attaching external accessories, with the quantity of said installation interfaces being at least one for each specification. In this disclosure, after installing electronic devices in the storage space, users can attach various external accessories to the installation interface as needed, meeting diverse requirements during the use of electronic devices for photography.

## Description

### Field

This disclosure pertains to the field of expansion frames, specifically addressing an expansion frame for electronic devices.

### Background

With the increasing pixel count of mobile phone cameras, the shooting capabilities of current market smartphones are becoming more optimized. However, existing smartphones can only meet users' general shooting needs, which are relatively limited and restrict the versatility of smartphone photography. In response to this situation, a prior art technology discloses a mobile phone case capable of connecting photographic lenses and filters (Application No. CN202222943812.2). This case includes a body for accommodating the phone, with a camera positioning area on the body. The camera positioning area corresponds to the location of the phone's camera and is designed to expose the camera. The camera positioning area protrudes from the back of the body, and at least one snap-fit is set on the outer edge of the camera positioning area. Additionally, there is an adapter ring with a through-hole in the middle for exposing the phone's camera. The adapter ring has at least one snap-fit corresponding to the snap-fit on the case, securing the adapter ring to the body. The inner or outer edge of the adapter ring is threaded for connecting with lenses or filters.

While this existing technology that discloses a mobile phone case capable of connecting photographic lenses and filters provides a convenient way to adapt various photographic lenses and filters, it primarily caters to connecting them to smartphones, leaving the range of available features somewhat limited. It still fails to satisfy users who wish to use additional accessories for a broader range of shooting needs.

### Summary

The purpose of this disclosure is to provide an expansion frame for electronic devices, as set out in the appended claims. This frame is equipped with installation interfaces for expanding various accessories, thereby meeting users' diverse shooting requirements when using a smartphone or tablet for photography.

To achieve this purpose, the technical solution of this disclosure is as follows:
An expansion frame for electronic devices, which is equipped with a storage space and at least one type of installation interface for attaching external accessories, with the quantity of the installation interfaces being at least one for each specification or interface standard.

After installing electronic devices in the storage space of the expansion frame, users can attach various external accessories to the installation interface as needed, meeting diverse requirements during the use of electronic devices for photography.

Furthermore, the expansion frame has at least one electrical interface for electrically connecting with external accessories, with the electrical interface corresponding to the position of the installation interface. This electrical interface is used for power supply or communication with accessories.

Furthermore, the expansion frame has a first opening for revealing the external electronic device display screen and a second opening for revealing one side of the external electronic device away from the display screen, with both the first and second openings communicating with the storage space.

Furthermore, the expansion frame has a protective layer within the installation groove, and the protective layer covers the installation groove. The protective layer is used to cover the installation groove and protect the phone.

Furthermore, the expansion frame has a first case and a second case for preventing the external electronic device from detaching. The second case is detachably connected to the first case, with the storage space positioned on the first case, and the second case corresponds to the position of the storage space. The collaboration of the second case and the first case ensures a more stable position for the phone after installation.

Furthermore, there is an installation groove within the storage space, with a power control module installed in the installation groove, and the power control module is connected to at least one of the electrical interfaces.

Furthermore, a cable is set between the protective layer and the second case, allowing the power control module to connect to at least one electrical interface through the cable.

Furthermore, the first case has locating protrusions inside the frame highlighting the storage space, and a positioning groove is set on the protective layer, with the locating protrusions securely fitting into the positioning groove. The coordination of the positioning groove and positioning protrusion makes the installation of the protective layer more convenient and ensures a stable position.

Furthermore, the installation interfaces include a first installation interface near one side of the external electronic device display screen within the expansion frame and a second installation interface on the opposite side away from the external electronic device display screen. The first and second installation interfaces correspond in position.

Likewise, the installation interfaces include a first installation interface and a second installation interface. The expansion frame contains a peripheral side, with the first and second installation interfaces located on the peripheral side of the expansion frame, corresponding in position, and used for assembling external accessories.

The setup of the first and second installation interfaces allows the attachment of external components such as lights, microphones, and controllers by clamping them separately into the two interfaces.

Furthermore, the first installation interface includes a first installation groove set around the outer side of the storage space, and the second installation interface includes a second installation groove corresponding to the first installation groove.

Furthermore, the expansion frame has at least one positioning hole, with the positioning hole corresponding to the position of the installation interface. The placement of these positioning holes serves to position external detachable components during installation.

Furthermore, the expansion frame has at least one anti-misalignment hole, with the positioning hole and anti-misalignment hole corresponding in position. The coordination of anti-misalignment holes and positioning holes prevents incorrect installation of external detachable components.

Furthermore, the installation interfaces cover a third installation interface and a fourth installation interface, both set on the side of the second opening, with the third and fourth installation interfaces corresponding to each other. The third and fourth installation interfaces can be used to install external magnetic components, which can then connect to external accessories such as radiators.

Furthermore, the electronic device includes the phone, tablet, or laptop, which is accommodated within the storage space.

The benefit of this disclosure lies in the fact that after installing electronic devices in the storage space, users can attach various external accessories to the installation interface as needed, meeting diverse requirements during the use of electronic devices for photography.

### Brief Description of the Drawings

FIG. 1 is a schematic diagram of the first perspective structure of the expansion frame installed with external electronic devices and accessories.
FIG. 2 is a schematic diagram of the second perspective structure of the expansion frame installed with external electronic devices and accessories.
FIG. 3 is an exploded view of the expansion frame.
FIG. 4 is a structural schematic diagram of the first perspective of the expansion frame.
FIG. 5 is a structural schematic diagram of the second perspective of the expansion frame.
FIG. 6 is a structural schematic diagram of another embodiment of the expansion frame.
FIG. 7 is a structural schematic diagram of the power control module, electrical interfaces, and cables.

### Detailed Description of the Drawings

To provide a clearer understanding of the purpose, technical solutions, and advantages of this disclosure, detailed explanations are provided below in conjunction with the accompanying drawings and embodiments. It should be understood that the specific embodiments described here are only for explaining this disclosure and are not intended to limit this disclosure.

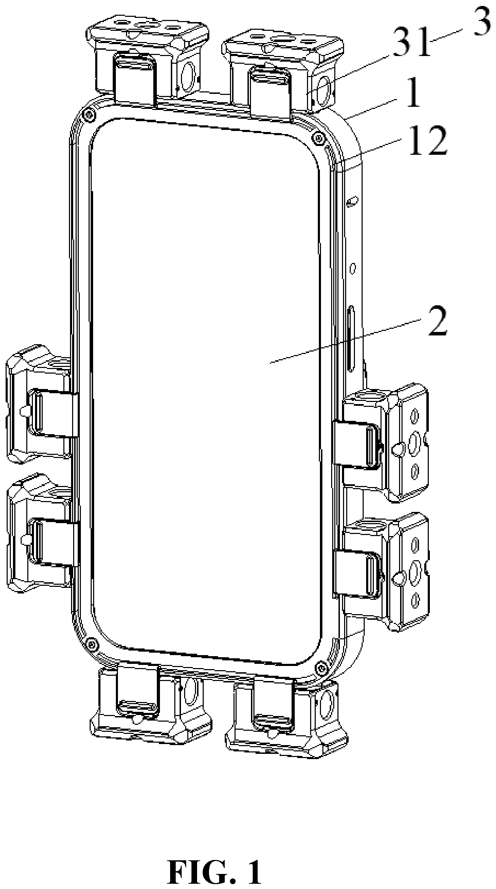

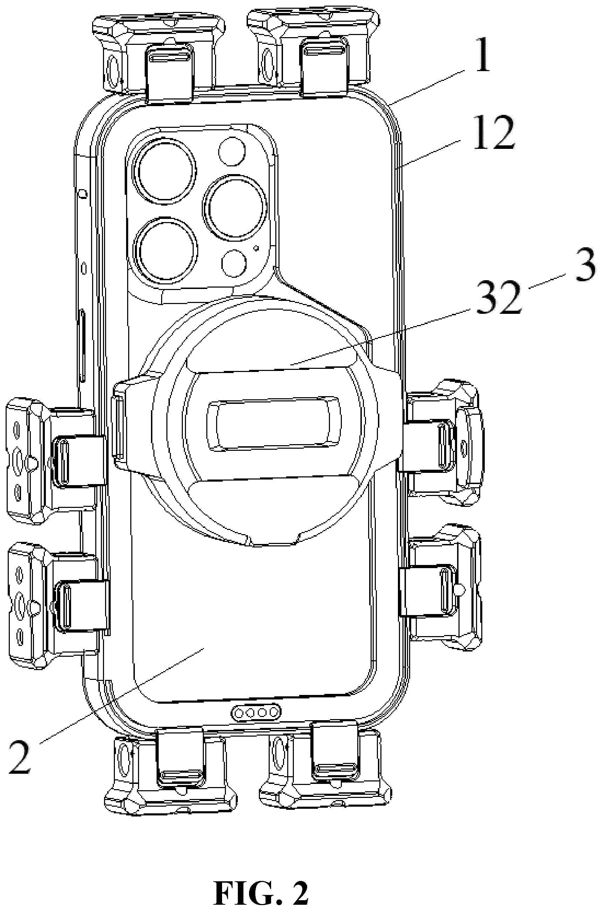

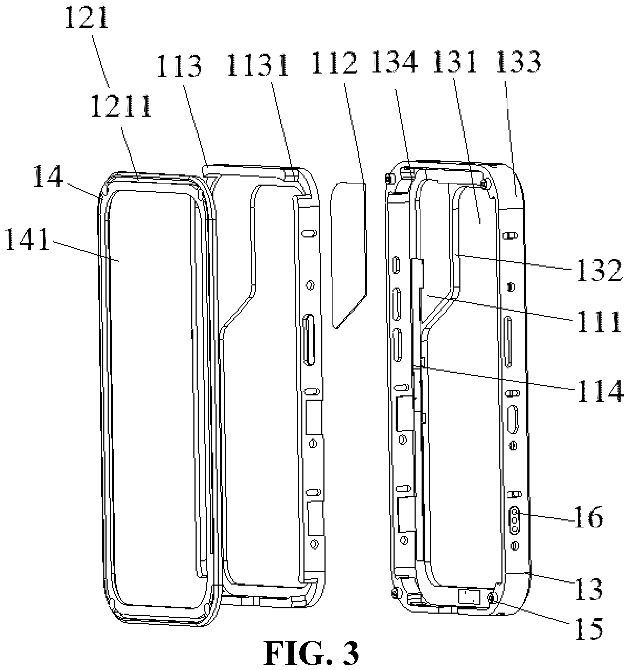

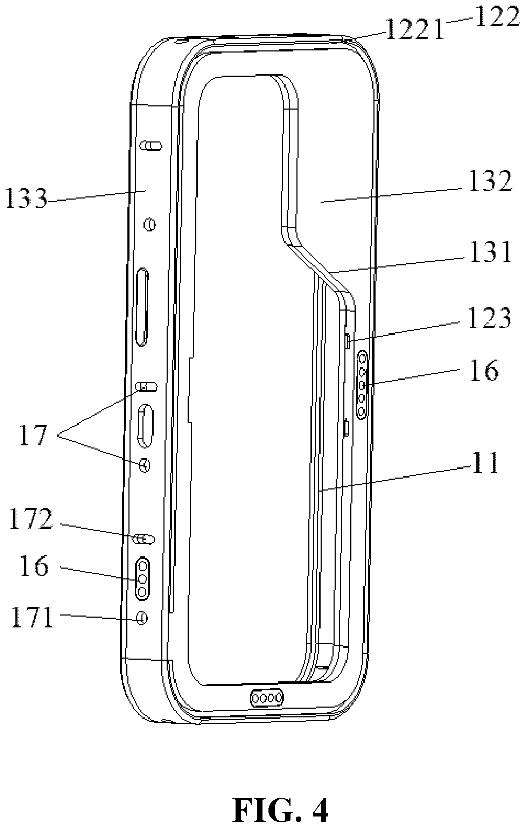

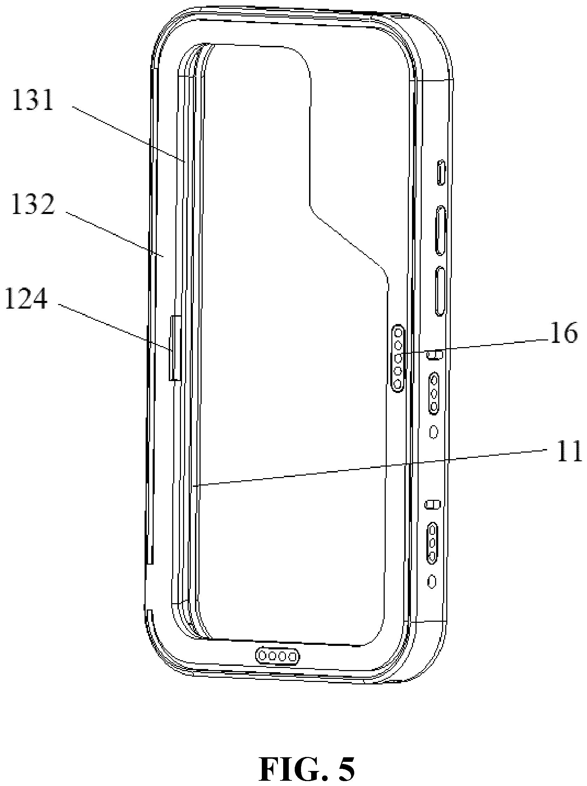

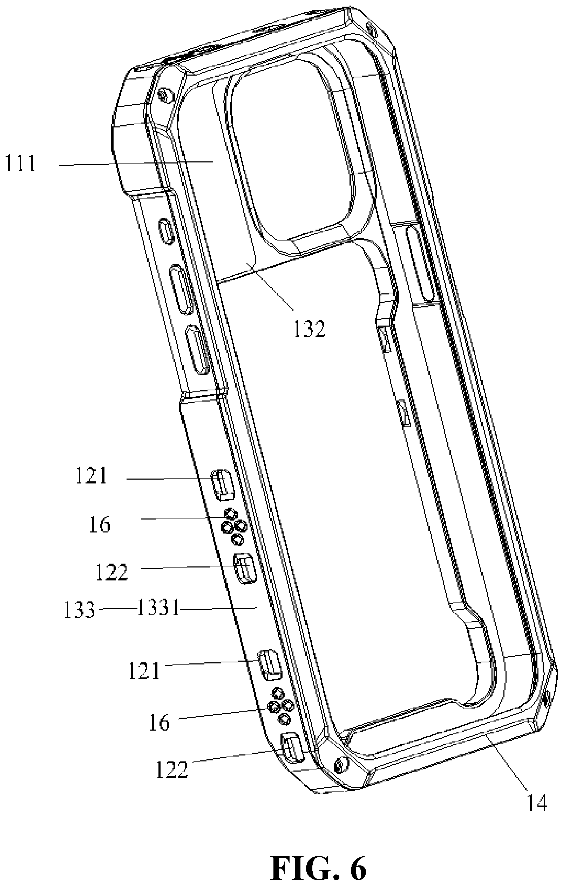

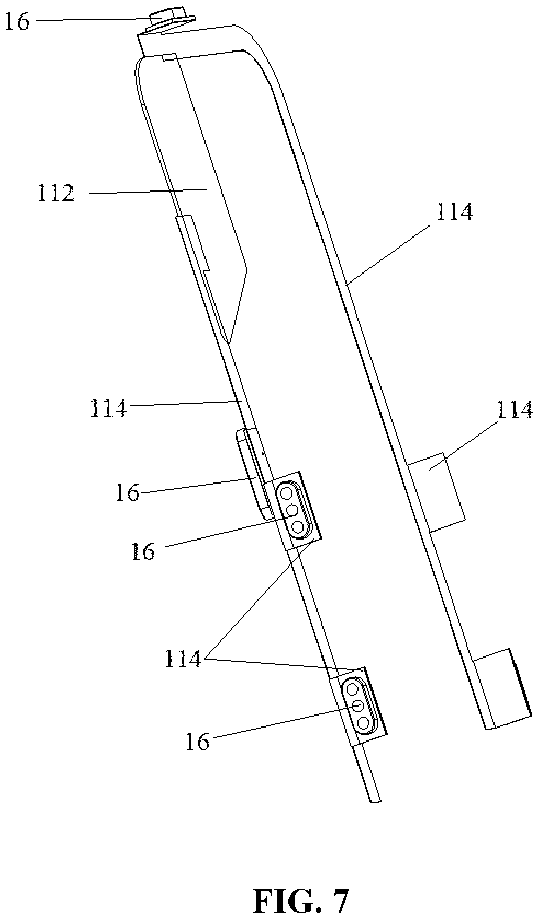

Referring to FIGs. 1-7, this embodiment provides an expansion frame for electronic devices. The expansion frame 1 is equipped with a storage space 11, which accommodates an external electronic device 2. Additionally, the expansion frame 1 is designed with installation interfaces 12 for attaching external accessories 3. The installation interfaces 12 can include at least one type, with at least one of each type of installation interface 12. When using the expansion frame 1, the external electronic device 2 is inserted into the storage space 11, and external accessories 3 are attached as needed to the corresponding installation interfaces 12. For example, as shown in FIG 4, some installation interfaces 12 are energized and some installation interfaces 12 are not. For example, a type of installation interface 12 as shown in FIG 6. For example, a type of installation interface 12 as shown in FIGs. 4-5. The external electronic device 2 can be a mobile phone, laptop, tablet, or other electronic device with a camera function. It is understood that mounting interfaces 12 for attaching and detaching external accessories 3 include either one or multiple types of mounting interfaces.

In this embodiment, the expansion frame 1 comprises a first case 13 and a second case 14 designed to prevent the external electronic device 2 from detaching. The second case 14 is detachably connected to the first case 13 by screws 15 at the four corners. The storage space 11 is positioned on the first case 13. After placing the external electronic device 2 into the storage space 11 of the first case 13, the second case 14 is securely fastened to the first case 13 using screws 15 to fix the position of the external electronic device 2.

In this embodiment, the second case 14 has a first opening 141 for revealing the external electronic device 2 display screen and a second opening 131 for revealing one side of the external electronic device 2 away from the display screen, with both the first and second openings 141 and 131 communicating with the storage space 12.

In this embodiment, the first case 13 includes an installation portion 132 and side walls 133. The side walls 133 are fixedly arranged around the installation portion 132, and the storage space 11 is formed between the installation portion 132 and the side walls 133. The second opening 131 is located on the installation portion 132.

In this embodiment, one type of installation interface 12 can include an electrical interface 16. For example, the expansion frame 1 is equipped with multiple electrical interfaces 16 for electrically connecting with external accessories 3. These electrical interfaces 16 correspond to two types of installation interfaces 12.

In this embodiment, there is an installation groove 111 within the storage space 11, with a power control module 112 installed in the installation groove 111, and the power control module 112 is connected to at least one of the electrical interfaces 16. Power supply control module 112 is used to power or communicate with external accessory 3. External accessory 3 includes a circuit board structure, and electrical interface 16 can be equipped with input and/or output functions.

In this embodiment, a protective layer 113 is placed inside the installation groove 111, covering the installation groove 111 to shield the power control module 112 located in the installation groove 111. This protective layer 113 also serves to protect the external electronic device 2 installed in the storage space 11. The protective layer can be made of flexible materials such as rubber or silicone.

Furthermore, in this embodiment, a cable 114 is set between the protective layer 113 and the first case 13. The power control module 112 is electrically connected to multiple electrical interfaces 16 through cable 114, and cable 114 is covered by the protective layer 113 to avoid protrusion into storage space 11.

Additionally, in this embodiment, the first case 13 is equipped with a positioning protrusion 134 that protrudes into the storage space 11. The positioning protrusion 134 is specifically fixed on the side wall 133 close to the storage space 11. The protective layer 113 has a positioning groove 1131, and the positioning protrusion 134 fits into the positioning groove 1131 to position the protective layer 113 during installation. This ensures a stable position of the protective layer 113 after installation.

In this embodiment, one type of installation interface 12 includes a first installation interface 121 and a second installation interface 122, offering multiple ways for locating these two interfaces.

Specifically, referring to FIGs. 1-5, one implementation involves a first installation interface 121 near one side of the external mobile phone 2 display screen in the storage space 11 within the expansion frame 1 and a second installation interface 122 on the opposite side away from the external mobile phone 2 display screen. The first and second installation interfaces 121 and 122 correspond in position. Specifically, the first installation interface 121 is located on the second case 14, while the second installation interface 122 is located on the installation portion 132.

The first installation interface includes a first installation groove 1211 set around the outer side of the storage space 11, and the second installation interface 122 includes a second installation groove 1221 corresponding to the first installation groove 1211. Specifically, the first installation groove 1211 surrounds the second case 14, and the second installation groove 1221 surrounds the installation portion 132 away from the storage space 11. The first installation groove 1211 and the second installation groove 1221 can either be continuous or consist of intermittent grooves.

When installing external accessory 3 on installation interface 12, an external detachable component 31 of external accessory 3 can be attached to the installation interface 12. Specifically, the external detachable component 31 is clamped into the first installation groove 1211 and the second installation groove 1221 for the installation of lighting, microphones, controllers, and other photography accessories. When electrical connection is required, the external detachable component 31 can serve as an adapter. Lighting, microphones, and handles can be integrally connected to the detachable component 31 or removably connected to the detachable component 31.

In an alternative design, referring to FIG. 6, the first and second installation interfaces 121 and 122 are located on a peripheral side 1331 of the expansion frame 1. This peripheral side 1331 is the side of the side wall 133 away from the storage space 11. The first and second installation interfaces 121 and 122 are positioned on the peripheral side 1331 of the side wall 133, and the first and second installation interfaces 121 and 122 correspond in position, facilitating the assembly of external accessories. The first and second installation interfaces 121 and 122 can be hole structures. Furthermore, at least one electrical interface 16 is set on the peripheral side 1331.

These two designs of the first and second installation interfaces 121 and 122 can be arranged on the expansion frame 1 simultaneously, or one of them can be selected based on needs.

In this embodiment, at least one electrical interface 16 is set on the side of the side wall 133 away from the storage space 11. Each electrical interface 16 passes through the side wall 133 to electrically connect to the power control module 112 through the cable 114. Multiple sets of electrical interfaces 16 can correspond flexibly to the installation interfaces 12, forming different designs with or without electrical interfaces 16. At least some installation interfaces 12 correspondingly have electrical interfaces 16.

In this embodiment, there are multiple auxiliary holes 17 on the expansion frame 1 designed for the installation of additional external accessories 3. These auxiliary holes 17 correspond in position to the installation interfaces 12.

Specifically, the multiple auxiliary holes 17 can correspond in quantity and position to the multiple electrical interfaces 16, allowing a combination of installation interfaces 12, auxiliary holes 17, and electrical interfaces 16 to facilitate both electrical and physical connections with external accessories. Alternatively, the number of auxiliary holes 17 may exceed the number of electrical interfaces 16, with only a portion of the auxiliary holes 17 corresponding to electrical interfaces 16. This allows the expansion frame 1 to have the flexibility to establish physical connections with external accessories 3 through a combination of auxiliary holes 17 and installation interfaces 12.

In this embodiment, the auxiliary holes 17 include circular positioning holes 171 and rectangular anti-misalignment holes 172. Both positioning holes 171 and anti-misalignment holes 172 correspond in position to the installation interfaces 12. The combination of anti-misalignment holes 172 and positioning holes 171 serves the dual purpose of providing precise positioning during the installation of external accessories 3 and preventing incorrect installation.

Referring to FIGs. 1-6, another type of installation interface 12 in this embodiment includes the third installation interface 123 and the fourth installation interface 124. Both the third installation interface 123 and the fourth installation interface 124 are arranged on the side of the second opening 131, and they correspond to each other. When installing external accessory 3 at installation interface 12 of the second specification, it can be easily mounted using the external magnetic component 32 of the accessory itself. Specifically, the external magnetic component 32 is mounted on the expansion frame 1 through the third installation interface 123 and the fourth installation interface 124. This external magnetic component 32 connects to photographic accessories such as a radiator. When an electrical connection is required, the external magnetic component 32 can also serve as an adapter.

In this embodiment, there is also an electrical interface 16 set on the side of the installation portion 132 away from the storage space 11. This electrical interface 16 passes through the installation portion 132 to connect to the power control module 112 through cable 114 within the storage space 11. This particular electrical interface 16 corresponds to the second type of installation interface 12.

The above is only one preferred embodiment of this disclosure, and it is not intended to limit this disclosure. Any modifications, equivalent substitutions, improvements, etc., made within the spirit and principles of this disclosure should be included within the scope of protection of this disclosure.

## Claims

1. An expansion frame for an electronic device, comprising:
an expansion frame providing a storage space for receiving the electronic device; and
a plurality of installation interfaces for attaching external accessories, with the plurality of installation interfaces being configured for one or more specifications.

2. An expansion frame according to claim 1, wherein the expansion frame comprises a plurality of electrical interfaces for electrically connecting with external accessories, with the plurality of electrical interfaces corresponding to the position of the plurality of installation interfaces.

3. An expansion frame according to claim 2, wherein the expansion frame further comprises:
an installation groove within the storage space; and
a power control module installed in the installation groove, the power control module being connected to at least one of the plurality of electrical interfaces.

4. An expansion frame according to claim 3, wherein the expansion frame is provided with a protective layer within the installation groove, and the protective layer covering the installation groove.

5. An expansion frame according to claim 4, further comprising:
a locating protrusion inside the expansion frame and protruding into the storage space; and
a positioning groove set on the protective layer, with the locating protrusion securely fitting into the positioning groove.

6. An expansion frame according to any preceding claim, wherein the expansion frame comprises:
a first opening for revealing an external display screen of the electronic device; and
a second opening for revealing a side of the electronic device away from the external display screen, with both the first opening and the second opening communicating with the storage space.

7. An expansion frame according to claim 6, wherein at least one of the plurality of installation interfaces comprise:
a third installation interface; and
a fourth installation interface,
both the third installation interface and the fourth installation interface being set on a side of the second opening, with the third installation interface and the fourth installation interface corresponding to each other in position.

8. An expansion frame according to any preceding claim, wherein the expansion frame comprises:
a first case; and
a second case for preventing the electronic device from detaching,
the second case being detachably connected to the first case, with the storage space positioned on the first case, and the second case corresponding to the position of the storage space.

9. An expansion frame according to claim 7, wherein the plurality of installation interfaces further comprise:
a third installation interface; and
a fourth installation interface,
both the third installation interface and the fourth installation interface being set on a side of the second opening, with the third installation interface and the fourth installation interface corresponding to each other in position.

10. An expansion frame according to any of claims 6, 7, or 9, or according to claim 8 when dependent on claim 6, wherein the plurality of installation interfaces comprise:
a first installation interface on a first side of the external display screen within the expansion frame; and
a second installation interface on a second side, opposite to the first side, of the external display screen,
the first installation interface and the second installation interface corresponding to each other in position.

11. An expansion frame according to any of claims 1-9, wherein the plurality of installation interfaces comprise:
a first installation interface; and
a second installation interface,
the expansion frame further includes a peripheral side, with the first installation interface and the second installation interface located on the peripheral side of the expansion frame, corresponding in position, and used for assembling external accessories.

12. An expansion frame according to any preceding claim, wherein the expansion frame comprises at least one positioning hole, with the positioning hole corresponding to positions of the plurality of installation interfaces.

13. An expansion frame according to claim 12, wherein the expansion frame comprises at least one anti-misalignment hole, with the at least one positioning hole and the anti-misalignment hole corresponding in position to each other.

14. An expansion frame according to any preceding claim, wherein the electronic device comprises a mobile phone, a tablet, or a laptop, and the mobile phone, the tablet, or the laptop is accommodated within the storage space.
